# EUROPEAN PATENT APPLICATION

(11) **EP 3 492 668 A1**
(43) Date of publication of application: **05.06.2019**
(21) Application number: 18209368.2
(22) Date of filing: 30.11.2018
(51) Int. Cl.: E04D 11/00, A01G 20/20

(54) **METHOD FOR COVERING A SURFACE OF A BUILDING STRUCTURE WITH A LAYER OF VEGETATION, AND A VEGETATION LAYER**

(30) Priority: 30.11.2017 SE 1751480
(71) Applicant: Urban Green AB, 101 23 Stockholm (SE)
(72) Inventor: NYSTRÖM, Per, 101 23 Stockholm (SE)
(74) Representative: AWA Sweden AB

(57) **Abstract**

The present invention relates to a method for covering a surface of a building structure (10) with a layer (100; 200) of vegetation, said method comprising the steps: a) covering the surface of the building structure (10) with a layer (14) of a material that is able to absorb water; b) arranging a layer (16) of macadam, gravel or pebbles on the layer (14) of a material that is able to absorb water; and c) distributing seeds and / or sprouts (20) over the layer (16) of macadam, gravel or pebbles. The invention furthermore relates to a vegetation layer.

## Description

### Field of the invention

The present invention relates to a method for covering a surface of a building structure with a layer of vegetation, and a vegetation layer.

### Background of the invention

In many different geographical areas, an increasing number of building structures are covered by different types of vegetation. The vegetation provides several advantages. First, the layer of vegetation is able to maintain rain water and avoid that draining pipes are flooded when large volumes of raining is falling at a short period of time. Secondly, the vegetation will have a positive impact on the climate in larger villages and cities since the amount of vegetation in the area is increased, and finally the vegetation could be used to improve the environment in larger villages and cities since where the space available for parks and green areas are limited.

During the building process, the building structure or roof is first covered by a water tight layer to prevent water from leaking into the structure under the roof. The water tight layer is then covered by a layer that is able to absorb water and maintain water over a period of time and finally a layer of vegetation that has been prepared in advance and transported to the location of the building structure is arranged on the water absorbing layer.

However, the preparation of the vegetation layer, the harvesting and the transport to the desired area makes the building process costly. Furthermore, in order to ensure that the vegetation layer will reach the final destination in good condition, the harvesting and installation could only take place during the summer period which makes it difficult to plan and finalize the work in time.

US Patent 5,836,107 disclose a multi-layer vegetation element that is rolled out on top of a building structure. The element contains living plant matter which risk being damaged and unusable during transport. The element is also bound to only be usable during seasons when the living plant matter is expected to grow due to the surrounding conditions.

There is consequently a need for an improved method for covering a building structure with a layer of vegetation, and a vegetation layer that reduces the problems defined above.

### Summary of the invention

The present invention, defined in the appended claims, provides a method for covering a surface of a building structure with a layer of vegetation, and a vegetation layer that to at least some extent fulfils the needs defined above.

The claimed method comprises the following steps:
a) covering the surface with a layer of a material that is able to absorb water;
b) arranging a layer of macadam, gravel or pebbles on the layer of a material that is able to absorb water;
c) distributing seeds and / or sprouts over the layer of macadam, gravel or pebbles.

The claimed method fulfils the needs defined above since the growth from seed or sprout to a covering layer of vegetation takes place on the building structure which eliminates several steps in the known previously used process to provide a building structure with a layer of vegetation.

By using the method according to the invention there is no need for growing, harvesting and transporting the layer of vegetation from one location to the final location of the building structure which saves time and consequently reduces the environmental impact and cost for manufacturing the building structure. Furthermore, the vegetation layer could be applied on the surface anytime during the year since the seeds and / or sprouts will start growing as soon as the surrounding conditions, i.e. temperature, light and moisture, are suitable for the particular spices distributed over the surface.

One embodiment of the method, further comprises an additional step d) conducted after step a) and before step b), or after step b) and before step c), or after step c) said step d) involving distributing of clay in granulated form or mixed with water over the surface. The addition of clay is beneficial since the clay is able to maintain different fertilizers in the layer and ensure suitable conditions for a long period of time.

One embodiment of the method, further comprises an additional step e) conducted after step d), said step e) involving distributing limestone with a fraction within the range 0 mm to 5 mm, or distributing a fluid comprising calcium over the surface. The addition of limestone or calcium improves the condition in the layer for many species and ensure suitable conditions for a long period of time.

One embodiment of the method, further comprises an additional step f) conducted after step c), said step f) involving distributing fertilizer over the surface to further adapt the conditions for the seeds and sprouts.

In one embodiment of the method, the fertilizer is provided as a granulate on the surface and comprises one or more of nitrogen, potassium, zinc or phosphorus.

One embodiment of the method, further comprises an additional step conducted before step a), said step involves covering the surface of the building structure with a draining layer that facilitates the removal of excess water. This embodiment is advantageous in combination with substantially horizontal structures like roofs where the draining of water otherwise is slow, or limited.

In one embodiment of the method, the layer of macadam, gravel or pebbles is supplied from a storage area via a pipe to the location of the surface of the building structure where it is distributed. This embodiment facilitates the distribution of macadam, gravel or pebbles over the surface.

The claimed invention furthermore relates to a vegetation layer for covering exterior surfaces of building structures. The vegetation layer comprises:
a layer of a material that is able to absorb water intended to be arranged adjacent to the surface of the building structure;
a layer of macadam, gravel or pebbles arranged on the layer of a material that is able to absorb water; and
seeds and / or sprouts distributed over the layer of macadam, gravel or pebbles.

The claimed vegetation layer, produced by the method defined above, provide a vegetation layer that is able maintain a large amount of water during rainfalls and prevent that the draining pipes in the area are flooded. The fact that the layer comprises the layer that is able to absorb water ensures that enough water is maintained to provide good conditions for the seeds and / or sprouts to grow and form the covering layer of vegetation.

In one embodiment of the vegetation layer, the layer of a material that is able to absorb water comprises a fibrous material made of mineral wool, rock wool or glass wool and has a thickness within the interval 20 mm to 80 mm. This embodiment of the layer provides excellent growing conditions and maintain large volumes of water during rainfalls and facilitates production since these materials have suitable characteristics regarding absorption and are produced in an efficient way.

In one embodiment of the vegetation layer, the material that is able to absorb water has a density within the range of 80 - 170 kg/m³ and is able to absorb an amount of water within the range of 30 - 45 kg / m². Materials with these characteristics are suitable for this purpose since they provide excellent growing conditions without adding to much weight to the building structure.

In one embodiment of the vegetation layer, the layer of macadam, gravel or pebbles has a thickness within the range of 10 mm to 40 mm and the layer comprises macadam, gravel or pebble structure with fractions substantially within the range of 10 mm to 40 mm. This ensures that the seeds and sprouts are exposed to light and that the roots of the growing sprouts are able to reach the water maintained in the layer underneath the layer of macadam, gravel or pebbles since the fractions ensure that there are gaps formed between the different pieces of macadam, gravel or pebbles for the seeds and / or sprout, and that the growing roots are able to reach the water maintained in the layer underneath the layer of macadam, gravel or pebbles.

In one embodiment of the vegetation layer, the layer furthermore comprises a draining layer arranged adjacent to the layer that is able to absorb water on opposite side as the layer of macadam, gravel or pebbles and wherein the draining layer (12) has a thickness within the range of 5 -25 mm. This embodiment is advantageous in combination with substantially horizontal structures like roofs where the draining of water otherwise is slow, or limited and ensuring that excess water is able to flow via the draining layer to draining pipes arranged to lead water from the building structure.

One embodiment of the vegetation layer furthermore comprises clay within the range of 0 - 2 kg/m² to better maintain essential fertilizers in the layer.

One embodiment of the vegetation layer furthermore comprises limestone with a fraction within the range 0 mm to 5 mm and/or fertilizers.

The different described embodiments of the invention could of course be combined in different ways without departing from the scope of the invention that will be described more in detail in the detailed description.

### Brief description of the drawings

In order to more clearly describe the invention, the following figures are provided to support the detailed description.
Figure 1 illustrates a cross-sectional view of a first embodiment of the vegetation layer according to the invention.
Figure 2 illustrates a cross-sectional view of a second embodiment of the vegetation layer according to the invention

### Detailed description of embodiments

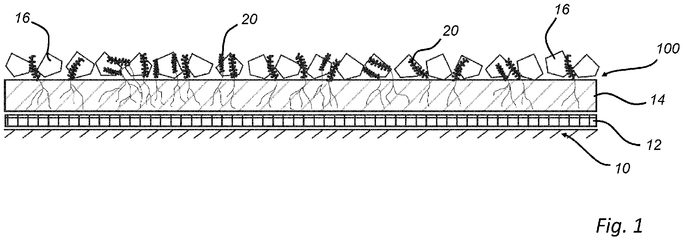

In figure 1 a cross-sectional view of a first embodiment of the vegetation layer according to the invention is illustrated. The layer could be used to cover for example a roof 10 of a building structure.

The building structure 10 is covered by a water tight membrane formed by for example a rubber, plastic or metal material. Adjacent to the building structure a draining layer 12 is arranged. The draining layer is for example formed by a plastic net structure that makes it possible for excess water to flow via the draining layer from the building structure, i.e. the roof. The draining layer has a thickness within the interval of 5 - 25 mm. The draining layer is preferably used if the building structure under the vegetation layer is substantially horizontal, alternatively only is slightly angled, since the draining otherwise is limited. If the angle of the roof is about 10° or more the draining layer could be excluded.

Above the draining layer 12, a layer 14 formed of a material that is able to absorb water is arranged. The layer that is able to absorb water has a thickness within the range of 20 - 80 mm to be able to absorb and maintain water for a long period of time thereby providing the vegetation growing on the layer with water even though no rain has fallen for a long period of time. The layer 14 is for example made of mineral wool, rock wool or glass wool that provide the desired characteristics to a reasonable cost. The layer is either provided in a plate-like shape or as board or on rolls. In one preferred embodiment of the invention the layer of material that is able to absorb water has a thickness of about 40 mm and the material a density of 120 kg/m³.

Once the layer of material that is able to absorb water is arranged on the draining layer or building structure, macadam 16, gravel or pebbles are spread over the surface, i.e on top of the building structure. The weight of the macadam, gravel or pebbles maintain the layer of material that is able to absorb water and the draining layer in the intended position on the building structure. The macadam, gravel or pebbles is at least partly covering the surface of the underlying layer but should enable access for the growing sprouts to the layer of material that absorb water such that the roots of the vegetation are able to penetrate the porous water absorbing layer and the water contained in the absorbing layer.

Applying the vegetation layer according to the claimed method, i.e applying the different layers separately directly on top of a building structure provides for facilitated transport of the different material used in the layers. It is therefore essential to have the different material used forming the vegetation layer to be added on site to achieve the stated benefits.

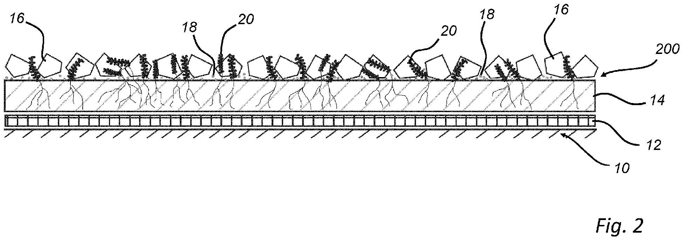

In figure 2, a second embodiment of the vegetation layer according to the invention is illustrated. This embodiment of the vegetation layer has all the different features defined above and furthermore comprises clay 18 applied in granulated form. The clay further improves the growing conditions since the clay is able to absorb and maintain fertilizers within the vegetation layer and thereby ensure suitable growing conditions over a longer period of time.

The claimed method for covering a surface of a building structure with a layer of vegetation involves the steps of first covering the building structure with the layer of a material that is able to absorb water and then distribute the layer of macadam, gravel or pebbles supplied via one or more pipes and suitable feeding means to the intended location of the covering vegetation layer, and finally distributing seeds and / or sprouts over the layer of macadam, gravel or pebbles. This method reduces the time required to complete the work considerably. The seeds or sprouts could be of different species selected from the desired appearance or selected to meet the expected conditions in the geographical area of the building structure.

As defined above, the addition of clay is beneficial. The clay could be distributed both before or after the macadam, gravel or pebbles is provided. Different species of vegetation have different needs to grow and in order to improve the conditions fertilizers could be provided to the surface.

The different embodiments described above could all be combined and modified in different ways without departing from the scope of the invention that is defined by the appended claims.

## Claims

1. Method for covering a surface of a building structure (10) with a layer (100; 200) of vegetation, said method comprising the steps:
a) covering the surface of the building structure (10) with a layer (14) of a material that is able to absorb water;
b) arranging a layer (16) of macadam, gravel or pebbles on the layer (14) of a material that is able to absorb water;
c) distributing seeds and / or sprouts (20) over the layer (16) of macadam, gravel or pebbles.

2. The method as defined in claim 1, further comprising an additional step d) conducted after step a) and before step b), or after step b) and before step c), or after step c) said step d) involving distributing of clay (18) in granulated form or mixed with water over the surface.

3. The method as defined in claim 2 , further comprising an additional step e) conducted after step d), said step e) involving distributing limestone with a fraction within the range 0 mm to 5 mm, or distributing a fluid comprising calcium over the surface.

4. The method as defined in claim 1, further comprising an additional step f) conducted after step c), said step f) involving distributing fertilizer over the surface.

5. The method as defined in claim 4, wherein the fertilizer is provided as a granulate on the surface and comprises one or more of nitrogen, potassium, zinc or phosphorus.

6. The method as defined in anyone of the previous claims, comprising an additional step conducted before step a), said step involves covering the surface of the building structure with a draining layer (12) that facilitates the removal of excess water.

7. The method as defined in anyone of the previous claims, wherein the layer (16) of macadam, gravel or pebbles is supplied from a storage area via a pipe and feeding means to the location of the surface of the building structure (10) where it is distributed.

8. Vegetation layer (100, 200) for covering a surfaces of building structures (10) produced according to the method in any of claims 1 - 7.

9. Vegetation layer (100; 200) for covering exterior surfaces of building structures (10), said vegetation layer (100; 200) comprising:
a layer (14) of a material that is able to absorb water intended to be arranged adjacent to the surface of the building structure;
a layer (16) of macadam, gravel or pebbles arranged on the layer of a material that is able to absorb water; and
seeds and / or sprouts (20) distributed over the layer of macadam, gravel or pebbles.

10. Vegetation layer according to claim 9, wherein the layer (14) of a material that is able to absorb water comprises a fibrous material made of mineral wool, rock wool or glass wool and has a thickness within the interval 20 mm to 80 mm.

11. Vegetation layer according to claim 9 or 10, wherein the material that is able to absorb water has a density within the range of 80 - 170 kg/m³ and is able to absorb an amount of water within the range of 30 - 45 kg / m².

12. Vegetation layer according to claim 9, wherein the layer (16) of macadam, gravel or pebbles has a thickness within the range of 10 mm to 40 mm and the layer comprises macadam, gravel or pebble structure with fractions substantially within the range of 10 mm to 40 mm.

13. Vegetation layer according to anyone of claims 9 - 12, furthermore comprising a draining layer (12) arranged adjacent to the layer (14) that is able to absorb water on opposite side as the layer of macadam, gravel or pebbles and wherein the draining layer (12) has a thickness within the range of 5 -25 mm.

14. Vegetation layer according to claim 12 , further comprising clay within the range of 0 - 2 kg/m².

15. Vegetation layer according to claim 14, further comprising limestone with a fraction within the range 0 mm to 5 mm and/or fertilizers.
